# EUROPÄISCHE PATENTANMELDUNG

(11) **EP 1 571 372 A2**
(43) Veröffentlichungstag der Anmeldung: **07.09.2005**
(21) Anmeldenummer: 05002390.2
(22) Anmeldetag: 04.02.2005
(51) Int. Cl.: F16H 48/08

(54) **Differenzialgetriebe für ein Kraftfahrzeug**

(30) Priorität: 06.03.2004 DE 102004011057
(71) Anmelder: AUDI AG, 85045 Ingolstadt (DE)
(72) Erfinder: Schels, Werner, 85080 Gaimersheim (DE); Kumpf, Gerhard, 85055 Ingolstadt (DE); Freyboth, Kurt, 85101 Lenting (DE); Schweickert, Thomas, 85049 Ingolstadt (DE); Weidemann, Dieter, 85055 Ingolstadt (DE); Brückel, Daniel, 85055 Ingolstadt (DE); Schöberl, Helmut, 85098 Grossmehring (DE)
(74) Vertreter: Asch, Konrad

(57) **Zusammenfassung**

Es betrifft ein Differenzialgetriebe für Kraftfahrzeuge, mit einem in einem Getriebegehäuse (12) drehbar gelagerten Ausgleichsgehäuse (14), das mit einem Antriebszahnrad (20) fest verbunden ist, wobei in dem Ausgleichsgehäuse (14) zwei abtreibende Achskegelräder (26,28) und zwei mit diesen kämmende und auf einem gehäusefesten Mitnehmerbolzen gelagerte Planetenkegelräder (24) angeordnet sind und die drehbar und axial im Ausgleichsgehäuse (14) geführten Achskegelräder Mittel zur drehmomentübertragenden Verbindung mit anzuschließenden Gelenkwellen aufweisen, wobei zumindest ein Achskegelrad (28) einstückig mit den Mitteln zur drehmomentübertragenden Verbindung ausgeführt ist. Zur Schaffung eines fertigungstechnisch günstigen und vermehrte konstruktive Freiheitsgrade aufweisenden Differenzialgetriebes wird vorgeschlagen, dass das zumindest eine Achskegelrad (28) ausschließlich über ein mit dem Mitnehmerbolzen (30) zusammenwirkendes und das Achskegelrad (28) zentrisch durchdringendes Halteteil (36) axial abgestützt ist.

## Beschreibung

Die Erfindung betrifft ein Differenzialgetriebe für Kraftfahrzeuge gemäß dem Oberbegriff des Patentanspruches 1.

Ein derartiges Differenzialgetriebe zeigt die FR 27 54 035 A1, bei dem das eine Achskegelrad einstückig mit dem ringförmigen Außenteil eines Gelenkes einer Gelenkwelle für den Antrieb eines Rades des Kraftfahrzeuges ausgebildet ist. Der Vorteil einer derartigen Ausbildung des Achskegelrades besteht darin, dass das Gelenk bzw. die Gelenkmitte der betreffenden Gelenkwelle nach innen, der Fahrzeugmitte zu verschiebbar ist. Dies ermöglicht bei einer seitlichen Anordnung des Differenzialgetriebes im Kraftfahrzeug, die beiden Gelenkwellen in etwa gleich lang auslegen zu können. Die axiale Abstützung des betreffenden Achskegelrades erfolgt dabei in üblicher Weise über das Ausgleichsgehäuse des Differenzialgetriebes.

Aufgabe der Erfindung ist es, ein Differenzialgetriebe der gattungsgemäßen Art baulich und fertigungstechnisch zu verbessern und montagegünstiger auszubilden.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass das zumindest eine Achskegelrad ausschließlich über ein mit dem Mitnehmerbolzen zusammenwirkendes und das Achskegelrad zentrisch durchdringendes Halteteil axial abgestützt ist. Durch diese Ausbildung kann das Ausgleichsgehäuse auf der Seite des Achskegelrades "offen" gestaltet sein und bietet damit vermehrte konstruktive Freiheitsgrade in der gesamten Differenzialgetriebegestaltung und der abtriebsseitigen Verbindung mit der Gelenkwelle.

Baulich besonders einfach kann das Halteteil eine koaxial zum Mitnehmerbolzen ausgerichtete und den Mitnehmerbolzen umschließende Hülse aufweisen, an der ein das Achskegelrad durchdringender, rotationssymmetrischer Führungszapfen befestigt ist. Der Führungszapfen wiederum kann mit einer lösbar befestigten Anlaufscheibe kombiniert sein, die das Achskegelrad hintergreift. Die Anlaufscheibe kann dabei bevorzugt auf den Führungszapfen aufgesteckt und mittels eines Sicherungsringes axial gehalten sein. Dies ergibt neben einer fertigungstechnisch einfachen Konstruktion eine einfach zu montierende Verbindung des Achskegelrades mit dem abstützenden Mitnehmerbolzen.

In vorteilhafter Weiterbildung der Erfindung kann das zumindest eine Achskegelrad becherförmig ausgeführt sein, mit einer Stirnwand mit angeformter Kegelverzahnung und einem zylindrischen Abschnitt, der in einem Nabenabschnitt des Ausgleichsgehäuses drehbar gelagert ist. Damit kann bei einer konstruktiv einfachen Gestaltung des Achskegelrades dieses in einem einfachen Montageschritt in das Ausgleichsgehäuse eingesteckt und über das Halteteil axial gesichert werden.

Bevorzugt kann an das zumindest eine Achskegelrad ein Anschlussflansch für die abtreibende Gelenkwelle angeformt sein, wobei der Anschlussflansch im wesentlichen außerhalb des Getriebegehäuses positioniert ist. Anstelle eines Anschlussflansches kann das Außenteil des Gelenkes der Gelenkwelle auch über eine Keilverzahnung oder dergleichen mit dem dann innenverzahnten Achskegelrad trieblich gekoppelt sein.

Ferner wird vorgeschlagen, dass das Außenteil des Gelenkes der Gelenkwelle in dem zylindrischen Abschnitt des Achskegelrades unmittelbar an dessen Stirnwand angrenzend positioniert ist, also baulich günstig möglichst tief in das Differenzialgetriebe hineinragt.

Dabei kann zur robusten und biegemomentfreien Antriebsübertragung der korrespondierende Befestigungsflansch an dem Außenteil des Gelenkes der Gelenkwelle im wesentlichen mit dem Gelenkmittelpunkt bzw. Schwenkpunkt in einer Rotationsebene liegen.

Das die Stirnwand des Achskegelrades durchdringende Halteteil kann mittels einer in die Stirnwand dicht eingesetzten Abdeckscheibe öldicht abgeschlossen sein. Dies stellt in einfacher Weise sicher, dass bei z.B. im Reparaturfall entfernter Gelenkwelle kein Schmieröl aus dem Differenzialgetriebe austreten kann.

Das Ausgleichsgehäuse kann fertigungstechnisch besonders günstig einteilig hergestellt sein, wobei die Achskegelräder und die Planetenkegelräder von der "offenen" Seite des Ausgleichsgehäuses bzw. des Nabenabschnittes her in das Ausgleichsgehäuse montierbar sind.

Des weiteren kann zur Schaffung eines möglichst kompakten und baulich gedrungenen Differenzialgetriebes das Antriebsrad mit dem Ausgleichsgehäuse ohne Verwendung von Schrauben formschlüssig, kraftschlüssig und/oder stoffschlüssig verbunden sein. Das Antriebsrad kann dabei auf das Ausgleichsgehäuse aufgepresst oder aufgeschrumpft sein, wobei im Verbindungsbereich ggf. eine formschlüssig wirkende Keilverzahnung vorgesehen sein kann; zusätzlich oder alternativ kann das Antriebsrad, z.B. ein Tellerrad, mit dem Ausgleichsgehäuse verschweißt sein (Laser- oder Elektronenstrahlschweißen, etc.).

Schließlich wird eine bevorzugte Verwendung eines Differenzialgetriebes in einem Antriebsaggregat für frontgetriebene Kraftfahrzeuge mit einem seitlich zum Antriebsaggregat angeordnetem Differenzialgetriebe vorgeschlagen, wobei das zumindest eine über das Halteteil axial abgestützte Achskegelrad unmittelbar auf die eine Gelenkwelle und das andere Achskegelrad über eine das Antriebsaggregat querende Zwischenwelle auf die andere Gelenkwelle abtreibt.

Ein Ausführungsbeispiel der Erfindung ist im folgenden mit weiteren Einzelheiten näher erläutert. Die schematische Zeichnung zeigt einen Längsschnitt durch ein teilweise dargestelltes Differenzialgetriebe für Kraftfahrzeuge mit Achskegelrädern, von denen eines unmittelbar mit dem Gelenk einer Gelenkwelle trieblich verbunden ist.

Das nur teilweise dargestellte Differenzialgetriebe 10 ist seitlich an ein Antriebsaggregat eines Kraftfahrzeuges angebaut und weist ein nur teilweise ersichtliches Getriebegehäuse 12 auf, in dem ein einteiliges Ausgleichsgehäuse 14 über Wälzlager 16, 18 drehbar gelagert ist.

Das im wesentlichen rotationssymmetrische Ausgleichsgehäuse 14 trägt ein Antriebszahnrad 20, das formschlüssig über eine Keilverzahnung bei 22 und kraftschlüssig durch Aufschrumpfen mit dem Ausgleichsgehäuse 14 fest verbunden ist. Das Antriebszahnrad 20 - ein an sich bekanntes Tellerrad eines Kegelraddifferenziales - kämmt in nicht ersichtlicher Weise mit einem Abtriebsritzel eines Geschwindigkeits-Wechselgetriebes des Antriebsaggregates des Kraftfahrzeuges.

Innerhalb des Ausgleichsgehäuses 14 sind zwei Planetenkegelräder 24 und zwei Achskegelräder 26, 28 angeordnet, die miteinander in Eingriff sind.

Die Planetenkegelräder 24 sind auf einem im Ausgleichsgehäuse 14 festgelegten Mitnehmerbolzen 30 drehbar gelagert und stützen sich radial nach außen über entsprechende ballige Führungsflächen (ohne Bezugszeichen) am Ausgleichsgehäuse 14 ab.

Das Achskegelrad 26 ist in einem Nabenabschnitt 14a des Ausgleichsgehäuses 14 drehbar gelagert und stützt sich in axialer Richtung über allgemein mit 26a bezeichnete, radiale Führungsflächen am Ausgleichsgehäuse 14 ab. Eine Keilverzahnung 26b bildet die drehmomentübertragende Verbindung zwischen dem Achskegelrad 26 und einer Zwischenwelle 32. Die Zwischenwelle 32 quert in nicht dargestellter Weise das Antriebsaggregat und trägt an ihrem nicht ersichtlichen Ende einen Anschlussflansch zur Verbindung mit dem Gelenk einer Gelenkwelle zum Antrieb des einen angetriebenen Vorderrades des Kraftfahrzeuges.

Das becherförmig gestaltete, einstückige Achskegelrad 28 setzt sich aus einer Stirnwand 28a mit der angeformten Kegelverzahnung 28f, einem zylindrischen Abschnitt 28b und einen daran angeformten Anschlussflansch 28c zusammen.

Der zylindrische Abschnitt 28b ist über Wälzlager bzw. Nadellager 34 in einem im Durchmesser größeren, weiteren Nabenabschnitt 14b des Ausgleichsgehäuses 14 drehbar gelagert. Der Nabenabschnitt 14b ist dabei "offen" ausgeführt. Das heißt, dass das Achskegelrad 28 in den Nabenabschnitt 14b frei einschiebbar bzw. in axialer Richtung nicht abgestützt ist.

Zur axialen Abstützung des Achskegelrades 28 ist ein Halteteil 36 vorgesehen, das sich aus einer den Mitnehmerbolzen 30 umschließenden Hülse 36a und einem axial ausgerichteten Führungszapfen 36b zusammensetzt. Der Führungszapfen 36b durchdringt eine zentrische Bohrung 28d in der Stirnwand 28a des Achskegelrades 28 und trägt eine aufgesteckte Anlaufscheibe 38, die mit-tels eines in den Führungszapfen 36b eingesprengten Sicherungsringes 40 gehalten ist.

Die Anlaufscheibe 38 hintergreift dabei die Stirnwand 28a des Achskegelrades 28 wie ersichtlich und stützt somit das Achskegelrad 28 über entsprechende radial verlaufende Führungsflächen 38a in axialer Richtung ab. Die Anlaufscheibe 38 weist zudem eine radial nach innen in eine Längsnut 36c des Führungszapfens 36b ragende Nase 38b auf, die als Verdrehsicherung dient und somit vermeidet, dass sich die Anlaufscheibe relativ zum Sicherungsring 40 verdrehen kann.

Das Halteteil 36 mit der Anlaufscheibe 38 und dem Sicherungsring 40 ist mittels einer in die Stirnwand 28a des Achskegelrades 28 eingesetzten Abdeckscheibe 42 öldicht abgeschlossen, wobei die Abdeckscheibe 42 wie ersichtlich in einen im Durchmesser größeren Bohrungsabschnitt 28e der Stirnwand 28a eingepresst ist.

Eine weitere Abdichtung des Achskegelrades 28 im Bereich dessen Gehäusedurchtritts durch das Getriebegehäuse 12 ist mittels eines an dem zylindrischen Abschnitt 28b anlaufenden Wellendichtringes 44 gegeben.

Der außerhalb des Getriebegehäuses 12 liegende Anschlussflansch 28c des Achskegelrades 28 ist mittels mehrerer Schrauben (nicht dargestellt) mit dem Befestigungsflansch 46a eines nur angedeuteten, ringförmigen Außenteils 46 eines homokinetischen Gelenks einer Gelenkwelle zum Antrieb des anderen angetriebenen Vorderrades des Kraftfahrzeuges fest verschraubt.

Der Befestigungsflansch 46a ist dabei derart versetzt am Außenteil 46 ausgebildet, dass mehr als die halbe Länge des Außenteils 46 innerhalb des zylindrischen Abschnitts 28b bis nahe an die Stirnwand 28a des Achskegelrades 28 herangeführt ist. Dadurch kann der angenommene Gelenkmittelpunkt 46b bzw. der Schwenkpunkt der besagten Gelenkwelle nach innen, der Differenzialmitte zu verschoben werden. Der Gelenkmittelpunkt 46b kann somit etwa in der Rotationsebene der Flansche 46a/28c positioniert sein.

Die Montage der Bauteile des Ausgleichsgehäuses 14 erfolgt von dessen "offener" Seite bei dem Nabenabschnitt 14b, wobei die Bauteile in folgender Reihenfolge einzubauen sind:

Es wird zunächst das Achskegelrad 26 in das Ausgleichsgehäuse 14 eingeschoben, dann werden die Planetenkegelräder 24 und das Halteteil 36 eingelegt und schließlich der Bolzen 30 entsprechend eingedrückt; sodann wird das Achskegelrad 28 in den zylindrischen Abschnitt 28b eingeführt und mittels der Anlaufscheibe 38 und dem Sicherungsring 40 axial gesichert. Das Tellerrad bzw. Antriebszahnrad 20 kann nach dem Einsetzen des Mitnehmerbolzens 30 auf das Ausgleichsgehäuse 14 aufgebracht werden. Die restliche Montage des Differenzialgetriebes 10 kann in üblicher Weise durchgeführt sein.

Die Erfindung ist nicht auf das dargestellte Ausführungsbeispiel beschränkt. So kann das Außenteil 46 des Gelenkes der Gelenkwelle auch in anderer Weise am Achskegelrad 28 befestigt sein, z.B. über eine Keilverzahnung und einen Sicherungsring innerhalb des Abschnittes 28b des Achskegelrades 28. Die besagten Flansche 28c, 46a könnten dann entfallen.

Bei einer anderen Anordnung des Differenzialgetriebes 10 am Antriebsaggregat, z.B. etwa mittig des Kraftfahrzeuges, könnte auch das zweite Achskegelrad 26 analog dem Achskegelrad 28 ausgeführt sein, wodurch auch der Gelenkpunkt 46b der zweiten Gelenkwelle entsprechend nach innen, der Differenzialmitte zu, verschiebbar wäre.

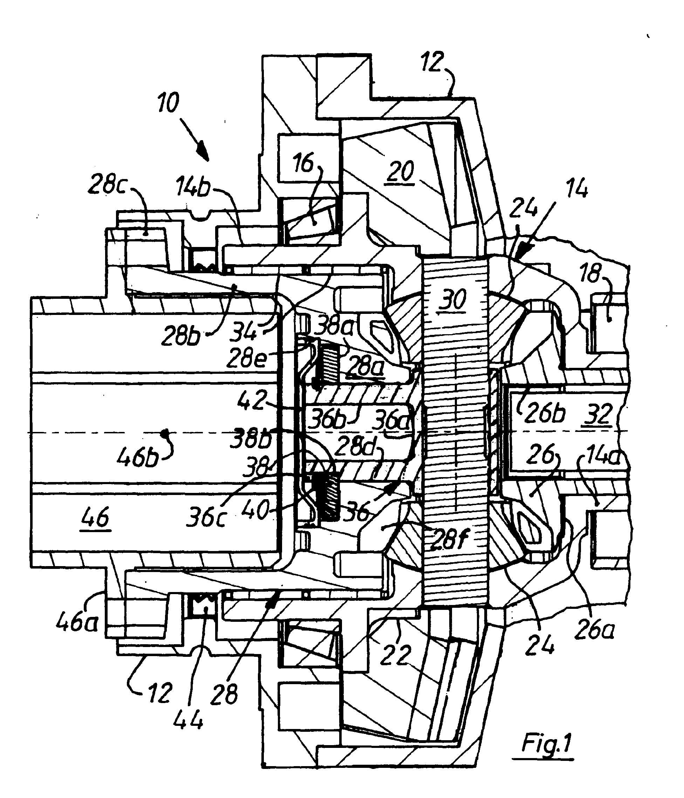

## Patentansprüche

1. Differenzialgetriebe für Kraftfahrzeuge, mit einem in einem Getriebegehäuse drehbar gelagerten Ausgleichsgehäuse, das mit einem Antriebszahnrad fest verbunden ist, wobei in dem Ausgleichsgehäuse zwei abtreibende Achskegelräder und zwei mit diesen kämmende und auf einem gehäusefesten Mitnehmerbolzen gelagerte Planetenkegelräder angeordnet sind und die drehbar und axial im Ausgleichsgehäuse geführten Achskegelräder Mittel zur drehmomentübertragenden Verbindung mit anzuschließenden Gelenkwellen aufweisen, wobei zumindest ein Achskegelrad einstückig mit den Mitteln zur drehmomentübertragenden Verbindung ausgeführt ist, **dadurch gekennzeichnet, dass** das zumindest eine Achskegelrad (28) ausschließlich über ein mit dem Mitnehmerbolzen (30) zusammenwirkendes und das Achskegelrad (28) zentrisch durchdringendes Halteteil (36) axial abgestützt ist.

2. Differenzialgetriebe nach Anspruch 1, **dadurch gekennzeichnet, dass** das Halteteil (36) eine koaxial zum Mitnehmerbolzen (30) ausgerichtete und den Mitnehmerbolzen (30) umschließende Hülse (36a) aufweist, an der ein das Achskegelrad (28) durchdringender, rotationssymmetrischer Führungszapfen (36b) befestigt ist.

3. Differenzialgetriebe nach Anspruch 2, **dadurch gekennzeichnet, dass** der Führungszapfen (36b) mit einer lösbar befestigten Anlaufscheibe (38) kombiniert ist, die das Achskegelrad (28) hintergreift.

4. Differenzialgetriebe nach Anspruch 3, **dadurch gekennzeichnet, dass** die Anlaufscheibe (38) auf den Führungszapfen (36b) aufgesteckt und mittels eines Sicherungsringes (40) axial gehalten ist.

5. Differenzialgetriebe nach einem oder mehreren der vorhergehenden Ansprüche, **dadurch gekennzeichnet, dass** die Anlaufscheibe (38) auf dem Führungszapfen (36b) gegen Verdrehung gesichert ist.

6. Differenzialgetriebe nach einem oder mehreren der vorhergehenden Ansprüche, **dadurch gekennzeichnet, dass** das zumindest eine Achskegelrad (28) becherförmig ausgeführt ist, mit einer Stirnwand (28a) mit angeformter Kegelverzahnung (28f) und einem zylindrischen Abschnitt (28b), der in einem Nabenabschnitt (14b) des Ausgleichsgehäuses (14) drehbar gelagert ist.

7. Differenzialgetriebe nach einem oder mehreren der vorhergehenden Ansprüche, **dadurch gekennzeichnet, dass** an das zumindest eine Achskegelrad (28) ein Anschlussflansch (28c) für die abtreibende Gelenkwelle angeformt ist, wobei der Anschlussflansch (28c) im wesentlichen außerhalb des Getriebegehäuses (12) positioniert ist.

8. Differenzialgetriebe nach einem oder mehreren der vorhergehenden Ansprüche, **dadurch gekennzeichnet, dass** das Außenteil (46) des Gelenkes der Gelenkwelle in dem zylindrischen Abschnitt (28b) des Achskegelrades (28) an dessen Stirnwand (28a) angrenzend positioniert ist.

9. Differenzialgetriebe nach Anspruch 8, **dadurch gekennzeichnet, dass** der korrespondierende Befestigungsflansch (46a) an dem Außenteil (46) des Gelenkes der Gelenkwelle im wesentlichen mit dem Gelenkmittelpunkt (46b) in einer Rotationsebene liegt.

10. Differenzialgetriebe nach einem oder mehreren der vorhergehenden Ansprüche, **dadurch gekennzeichnet, dass** das die Stirnwand (28a) des Achskegelrades (28) durchdringende Halteteil (36) mittels einer in die Stirnwand (28a) dicht eingesetzten Abdeckscheibe (42) öldicht abgeschlossen ist.

11. Differenzialgetriebe nach einem oder mehreren der vorhergehenden Ansprüche, **dadurch gekennzeichnet, dass** das Ausgleichsgehäuse (14) einteilig hergestellt ist, wobei die Achskegelräder (26, 28) und die Planetenkegelräder (24) von der Seite des Nabenabschnittes (14b) her in das Ausgleichsgehäuse (14) montierbar sind.

12. Differenzialgetriebe nach einem oder mehreren der vorhergehenden Ansprüche, **dadurch gekennzeichnet, dass** das Antriebszahnrad (20) mit dem Ausgleichsgehäuse (14) ohne Verwendung von Schrauben formschlüssig, kraftschlüssig und/oder stoffschlüssig verbunden ist.

13. Verwendung eines Differenzialgetriebes nach einem oder mehreren der vorhergehenden Ansprüche, in einem Antriebsaggregat für frontgetriebene Kraftfahrzeuge mit einem seitlich zum Antriebsaggregat angeordneten Differenzialgetriebe, wobei das zumindest eine über das Halteteil (36) axial abgestützte Achskegelrad (28) unmittelbar auf die eine Gelenkwelle und das andere Achskegelrad (26) über eine das Antriebsaggregat querende Zwischenwelle (32) auf die andere Gelenkwelle abtreibt.
